**Europäisches Patentamt**

**European Patent Office**

**Office européen des brevets**

(19)

(11) Veröffentlichungsnummer: **0 239 767**
**B1**

(12) **EUROPÄISCHE PATENTSCHRIFT**

(45) Veröffentlichungstag der Patentschrift:
**18.07.90**

(51) Int. Cl.⁵: **F16B 5/10**

(21) Anmeldenummer: **87102273.7**

(22) Anmeldetag: **18.02.87**

(54) **Drehverschluss zur Verbindung plattenförmiger Bauteile.**

(30) Priorität: **01.04.86 DE 3610868**

(43) Veröffentlichungstag der Anmeldung:
**07.10.87 Patentblatt 87/41**

(45) Bekanntmachung des Hinweises auf die Patenterteilung:
**18.07.90 Patentblatt 90/29**

(84) Benannte Vertragsstaaten:
**DE FR GB IT**

(56) Entgegenhaltungen:
**BE-A- 527 063**
**DE-A- 2 804 848**
**FR-A- 2 057 079**
**US-A- 2 424 603**
**US-A- 2 825 482**

**Industrial Fasteners Handbook, 2nd Edition, April 1980,**
**pages 366-371**

(73) Patentinhaber: **CAMLOC GmbH, Industriestrasse 6,**
**D-6233 Kelkheim(DE)**

(72) Erfinder: **Van Helden, Wilhelm, Brunhildensteg 32,**
**D-6384 Schmitten 3 (Oberreifenberg)(DE)**

(74) Vertreter: **Keil, Rainer A., Dipl.-Phys. Dr. et al, KEIL &**
**SCHAAFHAUSEN Patentanwälte Eysseneckstrasse 31,**
**D-6000 Frankfurt am Main 1(DE)**

**Beschreibung**

Die Erfindung betrifft einen Drehverschluß zur Verbindung plattenförmiger Bauteile nach dem Oberbegriff des Anspruchs 1.

Ein derartiger Drehverschluß ist aus der DE-A 2 804 848 bekannt. Dort ist eine Befestigungsvorrichtung zum lösbaren Verbinden zweier Bauteile beschrieben und gezeigt, welche aus einer an einem Primärbauteil abstützbaren und beide Bauteile über Ausnehmungen durchgreifenden Lagerhülse und einem in der Lagerhülse entgegen der Wirkung einer Schraubenfeder axial verschiebbaren und drehbaren Riegelbolzen, der in einem die Lagerhülse beiderseits überragenden Querriegel endet, besteht. Der Querriegel ist in stirnseitigen, von axialen Vorsprüngen unterschiedlicher Höhe begrenzten Rastkerben der Lagerhülse einrastbar. Nachteilig ist hierbei die Federkraftabhängigkeit der Verdrehsicherung des Riegelbolzens gegenüber der Lagerhülse, wodurch es zu einem ungewollten Öffnen des Verschlusses kommen kann. Weitere Nachteile liegen in der engen Bandbreite der verwendbaren Plattenstärken sowie in der schwierigen Handhabung dieses Drehverschlusses, da der Querriegel immer von Hand in zwei unterschiedliche Positionen dirigiert werden muß.

Davon ausgehend liegt der vorliegenden Erfindung die Aufgabe zugrunde, einen Drehverschluß der eingangs genannten Art zu schaffen, der funktionssicher für eine größere Bandbreite unterschiedlicher Plattenstärken eingesetzt werden kann und dabei leicht handhabbar ist.

Diese Aufgabe wird erfindungsgemäß durch den Gegenstand des Anspruchs 1 gelöst.

Die erfindungsgemäße Ausbildung ermöglicht eine einfache Handhabung des Drehverschlusses, da der Bolzen durch die Nuten immer zwangsgeführt ist. Außerdem wird der Bolzen besonders sicher in der Verriegelungsstellung gehalten.

Bei einer besonders vorteilhaften Weiterbildung der Erfindung sind die nutenförmigen Vertiefungen Y-förmig ausgebildet, wodurch sich eine exakte Führung des Bolzens während des Ent- und Verriegelungsvorganges ergibt.

Bei einer weiteren vorteilhaften Ausgestaltung der Erfindung befinden sich die nutenförmigen Vertiefungen am Bolzen oberhalb des Querteils und der Vorsprung in der Bohrung der Aufnahme, wodurch der Einsatzbereich bezüglich unterschiedlicher Plattenstärken trotz kompakter Bauweise besonders groß ist.

Um ein Verklemmen des Bolzens in der Aufnahme zu verhindern, ist der Bolzen bei einer noch weiteren vorteilhaften Weiterbildung der Erfindung mit zwei Systemen sich gegenüberliegender nutenförmiger Vertiefungen versehen.

Eine besonders einfache Ausgestaltung sieht vor, daß die Aufnahme aus einer Grundplatte und einem Rohrstück besteht, was leicht herstellbar ist und eine sichere Montage von Federglied in der Aufnahme und der Aufnahme an dem ersten Bauteil gestattet.

Bei einer vorteilhaften Weiterbildung der Erfindung übergreift der Kopf des Bolzens das Rohrstück, wodurch der Verschluß sehr einfach zu handhaben und gegen Verschmutzen abgedeckt ist.

Um beim Ent- bzw. Verriegelungsvorgang ein Mitdrehen der Aufnahme zu verhindern, ist diese bei einer vorteilhaften Ausgestaltung der Erfindung gegenüber dem ersten Bauteil gegen Verdrehen gesichert.

Eine besonders einfache und wirkungsvolle Verdrehsicherung kann z.B. dadurch erreicht werden, daß an der Unterseite der Aufnahme ein Zapfen angebracht ist, der in eine Bohrung des ersten Bauteils einsetzbar ist.

Um eine einfache und zuverlässige Zentrierung der Aufnahme auf dem ersten Bauteil sicherzustellen, ist bei einer vorteilhaften Weiterbildung der Erfindung an der Aufnahme um die Bohrung ein Zentrierring angeordnet, der in die Montagebohrung des ersten Bauteils einsetzbar ist.

In einer weiteren bevorzugten Ausgestaltung der Erfindung ist an dem Bolzen ein Kopf befestigt, der durch seine Lage im Verhältnis zur Aufnahme die Stellung des Bolzens anzeigt, was zu einer weiteren Verbesserung der Handhabung führt.

Bei einer Weiterbildung der Erfindung ist das Querteil des Bolzens so geformt, daß es durch Schrägstellung des Bolzens auch durch Bohrungen in den plattenförmigen Bauteilen, deren Durchmesser geringfügig kleiner als die größte Querausdehnung des Querteils ist, hindurchführbar ist. Dadurch wird erreicht, daß der Verschluß in das erste Bauteil einsetzbar und dort bis zur weiteren Montage der anderen plattenförmigen Bauteile gegen Herausfallen gesichert ist.

Ein Ausführungsbeispiel der Erfindung wird nachstehend in Verbindung mit der Zeichnung näher erläutert.

Es zeigt:

Fig. 1 einen Längsschnitt durch einen Drehverschluß gemäß der Erfindung in geschlossener Stellung,

Fig. 2 einen Längsschnitt durch den Drehverschluß gemäß Fig. 1 in geöffneter Stellung,

Fig. 3 einen Querschnitt gemäß Linie III–III in Fig. 1, wobei eine Schraubenfeder nicht gezeigt wird,

Fig. 4 einen Längsschnitt gemäß Linie IV–IV in Fig. 3,

Fig. 5 eine Draufsicht auf den Drehverschluß im geschlossenen Zustand,

Fig. 6 eine Draufsicht auf den Drehverschluß im offenen Zustand.

Der in der Zeichnung vergrößert dargestellte Drehverschluß ist vorzugsweise aus Kunststoff hergestellt und besteht im wesentlichen aus einem mit einem Querteil 4 versehenen Bolzen 2, einer Aufnahme 6, einer Schraubenfeder 12 und einem Kopf 14.

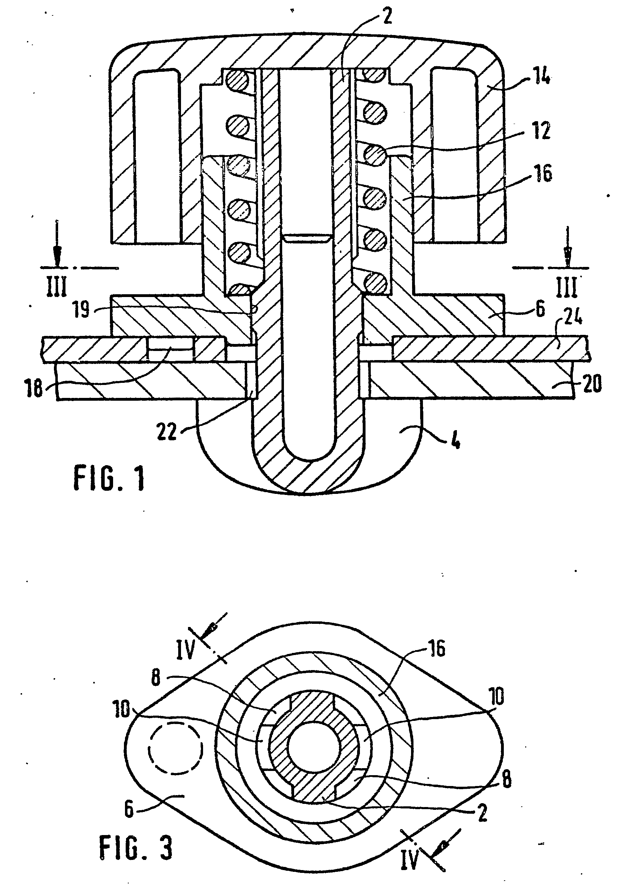

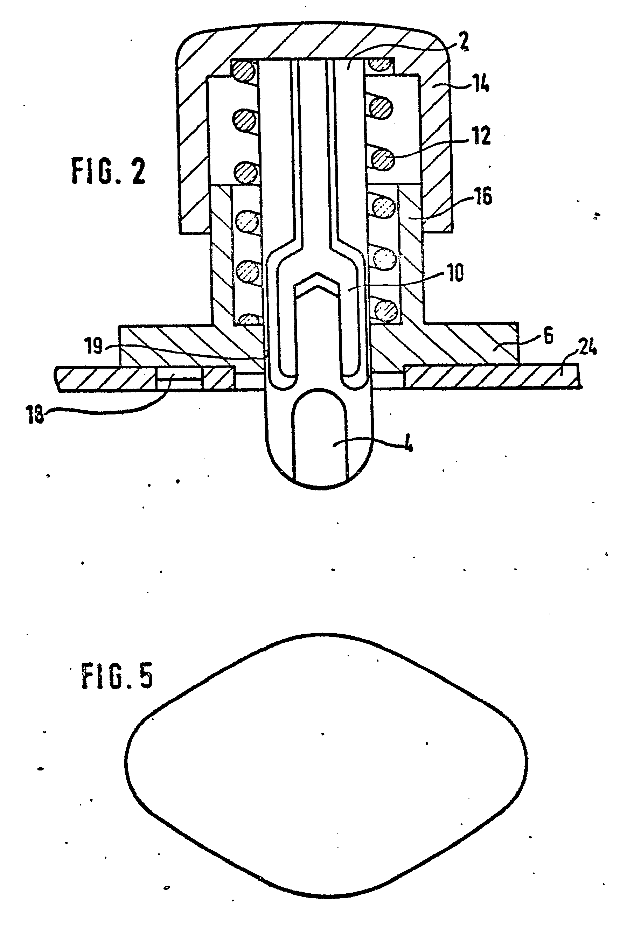

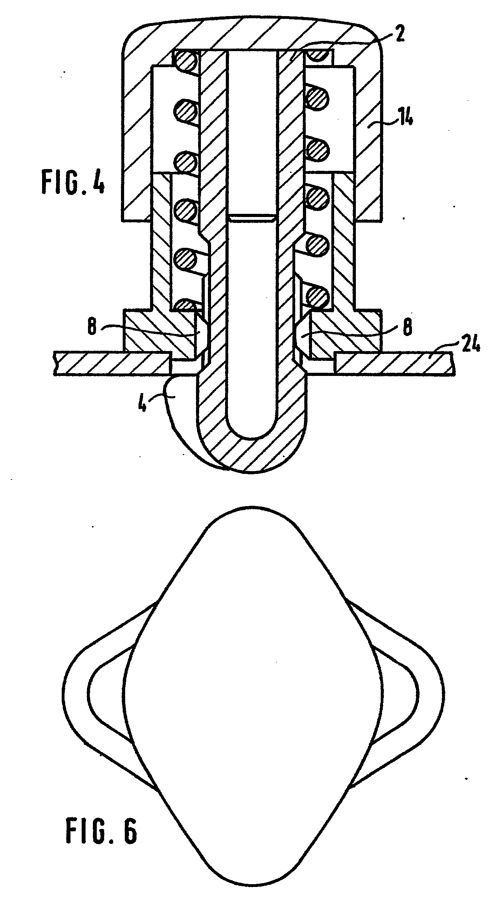

An dem in Fig. 1, 2 und 4 senkrecht stehenden Bolzen 2, der in der Aufnahme 6 geführt wird, ist an seinem unteren abgerundeten Ende das im wesentlichen halbkreisförmige flache Querteil 4 in der Weise angebracht, daß es sich in einer Lage symmetrisch zur Mittelachse des Bolzens 2 befindet und seine im wesentlichen halbkreisförmige Außenkante im Bereich der Mittelachse des Bolzens 2 mit der abgerundeten Außenkante des Bolzens 2 zusammenfällt. Durch diese Form kann Querteil 4 auch durch Bohrungen, deren Durchmesser kleiner ist als die größte Querausdehnung des Querteils 4, hindurchtreten. Der Drehverschluß mit dem Bolzen 2 wird dazu zunächst schräg auf eine Bohrung eines obersten plattenförmigen Bauteils 24, an welchem der Drehverschluß angebracht werden soll, so aufgesetzt, daß eine Seite des Querteils 4 durch die Bohrung hindurchtritt und anschließend durch Senkrechtstellen des Drehverschlusses und damit des Bolzens 2 die zweite Seite des Querteils 4 durch die Bohrung hindurch nachfolgt.

Oberhalb des Querteils 4 sind am Bolzen 2 zwei Systeme sich in axialer Richtung erstreckender diametral gegenüberliegender nutenförmiger Vertiefungen 10 angebracht, die jeweils die Form eines auf den Kopf gestellten Ypsilons besitzen und so angeordnet sind, daß diejenigen Abschnitte der Vertiefungen 10, die die Gabel des Ypslons bilden, das Querteil 4 in deren Mitte nehmen.

Die Aufnahme 6 des Drehverschlusses hat eine flanschartige Grundplatte, die bspw. die Form eines an den Ecken abgerundeten Parallelogramms besitzt, in dessen Mitte ein Rohrstück 16 fest an der Grundplatte senkrecht angebracht ist, das in seiner Längserstreckung wesentlich kürzer ist als der Bolzen 2. Ebenfalls in der Mitte der parallelogrammförmigen Grundplatte der Aufnahme 6 befindet sich eine Bohrung 19, deren Bohrungsachse mit der Rohrachse des Rohrstückes 16 zusammenfällt. Der Durchmesser der Bohrung 19 ist dabei kleiner als der Innendurchmesser des Rohrstückes 16. Der größere Durchmesser des Rohrstückes 16 gegenüber der Bohrung 19 erlaubt die Aufnahme der auf den Bolzen 2 gesteckten Schraubenfeder 12, die sich auf der einen Seite·in der Aufnahme 6 und auf der anderen Seite im Kopf 14 abstützt. In der Bohrung 19 befinden sich zwei diametral gegenüberliegende Vorsprünge 8, die in die Vertiefungen 10 des Bolzens 2 eingreifen und so den Bolzen 2 während des Öffnungs- bzw. Schließvorgangs führen. An der Unterseite der Grundplatte der Aufnahme 6 befinden sich ein fest angebrachter Zapfen 18, der ein Mitdrehen der Aufnahme 6 beim Öffnen bzw. Schließen des Drehverschlusses verhindert, indem er in eine entsprechende Bohrung des den Drehverschluß tragenden Bauteils 24 eingeführt wird, und ein aus der Ebene herausragender, um die Bohrung 19 angeordneter Ring, der die Aufnahme 6 auf dem in Fig. 1 oberen, den Drehverschluß tragenden plattenförmigen Bauteil 24 zentriert.

An dem dem Querteil 4 gegenüberliegenden Ende des Bolzens 2 ist der topfförmige Kopf 14, dessen zur Grundplatte der Aufnahme 6 parallele Klopfplatte ein gleichgroßes Parallelogramm bildet, fest angebracht, wobei der Mittelpunkt des Parallelogramms des Kopfes 14 auf der Mittelachse des Bolzens 2 liegt und der Kopf 14 mit einem in ihm zusätzlich angebrachten topfartigen Abschnitt teilweise das Rohrstück 16 der Aufnahme 6 übergreift. Die gleiche Form der Kopfplatte des Kopfes 14 und der Grundplatte der Aufnahme 6 hat zur Folge, daß die Stellung des Kopfes 14 im Verhältnis zur Aufnahme 6 der Kontrolle des Drehzustandes des Drehverschlusses ermöglicht. Befinden sich die Vorsprünge 8 in der jeweils einen Gabelhälfte der ypsilonförmigen Vertiefungen 10 und verdeckt der Kopf 14 die Aufnahme 6 von oben betrachtet völlig, so ist der Drehverschluß geschlossen. Befindet sich der Kopf 14 dagegen in einer Stellung, die die Aufnahme 6 von oben betrachtet teilweise erkennen läßt, so ist der Drehverschluß offen.

Um den am plattenförmigen Bauteil 24 befestigten Drehverschluß zu öffnen bzw. zu schließen, muß der Bolzen 2 entgegen der Federkraft der Schraubenfeder 12 nach unten gedrückt werden, so daß das Querteil 4 frei bewegbar ist, bis die Vertiefungen 10, die dabei mit jeweils einer der Gabelhälften an einem der Vorsprünge 8 entlanggleiten, mit ihren oberen Enden der jeweiligen Gabelhälften an den Vorsprüngen 8 anschlagen. Das Querteil 4 kann nun durch eine diametral erweiterte Bohrung 22 eines von unten an dem Bauteil 24 festzulegenden plattenförmigen Bauteils 20 hindurchgeführt werden. Durch eine Drehbewegung um 90° gelangen die Vorsprünge 8 in die jeweilige andere Gabelhälfte der ypsilonförmigen Vertiefungen 10, so daß durch die Federkraft der Schraubenfeder 12 der Bolzen 2 nach oben zurückfedern kann. Dadurch befindet sich das Querteil 4 quer zur diametral erweiterten Bohrung 22 und preßt die plattenförmigen Bauteile 20, 24 zusammen, so daß diese sicher zusammengehalten werden.

## Patentansprüche

1. Drehverschluß zur Verbindung plattenförmiger Bauteile (20, 24), mit einer auf das erste Bauteil (24) aufsetzbaren Aufnahme (6), einem mit einem Querteil (4) versehenen, für den Durchtritt durch die Bauteile (20, 24) bestimmten und in einer Bohrung (19) der Aufnahme (6) aufgenommenen Bolzen (2), wobei Aufnahme (6) und Bolzen (2) mit zusammenwirkenden Führungsmitteln (8, 10) ausgestattet sind, sowie mit einem Federglied (12), welches zwischen Bolzen (2) und Aufnahme (6) angeordnet ist, wobei der Bolzen (2) bei Bewegungen in beide Richtungen zwischen der Entriegelungsstellung und der Verriegelungsstellung eine axiale Längsbewegung entgegen der Federkraft des Federgliedes (12), eine anschließende Drehbewegung und eine daran anschließende Längsbewegungung in Richtung der Federkraft des Federgliedes (12) ausführt, und wobei das Querteil (4) so ausgebildet ist, daß es in der Verriegelungsstellung des Bolzens (2) quer zu einer diametral erweiterten Bohrung (22) des zweiten Bauteils (20) zu liegen kommt und der Bolzen (2) nur im eingefederten Zustand um seine Längsachse drehbar ist, dadurch gekennzeichnet, daß die Führungsmittel (8, 10) aus mindestens einem im Bereich der Bohrung (19) vorgesehenen Vorsprung (8) und sich axial erstreckenden nutenförmigen Vertiefungen (10) bestehen und daß der Bolzen (2) durch Eingreifen des Vorsprungs (8) in die nutenförmigen Vertiefungen (10) während des Öffnungs- und Schließvorganges geführt ist.

2. Drehverschluß nach Anspruch 1, dadurch gekennzeichnet, daß die nutenförmigen Vertiefungen (10) in Seitenansicht Y-förmig ausgebildet sind.

3. Drehverschluß nach Anspruch 1 oder 2, dadurch gekennzeichnet, daß sich die nutenförmigen Vertiefungen (10) am Bolzen (2) oberhalb des Querteils (4) und der Vorsprung (8) in der Bohrung (19) der Aufnahme (6) befinden.

4. Drehverschluß nach einem der Ansprüche 1 bis 3, dadurch gekennzeichnet, daß der Bolzen (2) mit zwei Systemen sich diametral gegenüberliegender nutenförmiger Vertiefungen (10) versehen ist, welche mit zwei Vorsprüngen (8) der Aufnahme (6) zusammenwirken.

5. Drehverschluß nach einem der Ansprüche 1 bis 4, dadurch gekennzeichnet, daß die Aufnahme (6) eine für die Anlage an das erste Bauteil (24) bestimmte Grundplatte und ein für die Aufnahme des Federglieds (12) bestimmtes Rohrstück (16) aufweist.

6. Drehverschluß nach Anspruch 5, dadurch gekennzeichnet, daß an dem dem Querteil (4) gegenüberliegende Ende des Bolzens (2) ein Kopf (14) angebracht ist, der das Rohrstück (16) übergreift.

7. Drehverschluß nach einem der Ansprüche 1 bis 6, dadurch gekennzeichnet, daß die Aufnahme (6) gegenüber dem ersten Bauteil (24) gegen Verdrehen sicherbar ist.

8. Drehverschluß nach Anspruch 7, dadurch gekennzeichnet, daß als Verdrehsicherung an der Unterseite der Aufnahme (6) ein Zapfen (18) angebracht ist.

9. Drehverschluß nach einem der Ansprüche 1 bis 8, dadurch gekennzeichnet, daß die Aufnahme (6) einen um die Bohrung (19) angeordneten Zentrierung für den Eingriff in die Montagebohrung des ersten Bauteils (24) aufweist.

10. Drehverschluß nach einem der Ansprüche 6, dadurch gekennzeichnet, daß der Kopf (14) so ausgebildet ist, daß er durch seine Lage im Verhältnis zur Aufnahme (6) die Stellung des Bolzens (2) anzeigt.

11. Drehverschluß nach einem der Ansprüche 1 bis 10, dadurch gekennzeichnet, daß das Querteil (4) des Bolzens (2) so geformt ist, daß es unter Kippen des Bolzens (2) auch durch Bohrungen im ersten Bauteil (24), deren Durchmesser geringfügig kleiner als die größte Querausdehnung des Querteils (4) ist, hindurchführbar ist.

**Claims**

1. Rotary fastener for connecting plate-like components (20, 24) having a receiver (6) which can be placed upon the first component (24), a pin (2) which is provided with a transverse portion (4), is intended for passage through the components (20, 24) and is received in a bore hole (19) of the receiver (6), with receiver (6) and pin (2) being fitted with cooperating guide means (8, 10), and also having a spring element (12) which is arranged between pin (2) and receiver (6), with the pin (2), in the case of movements in both directions between the unlocking position and the locking position, executing an axial longitudinal movement in opposition to the spring force of the spring element (12), a subsequent movement of rotation and, subsequent to that a longitudinal movement in the direction of the spring force of the spring element (12) and with the transverse portion (4) being formed in such a way that, in the locking position of the pin (2) it comes to lie transversely in relation to a diametrically widened bore hole (22) of the second component (20) and the pin (2) being rotatable about its longitudinal axis only in the sprung-in state, characterised in that the guide means (8, 10) consist of at least one projection (8), which is provided in the region of the bore hole (19), and axially extending groove-like recesses (10) and in that the pin (2) is guided by engagement of the projection (8) into the groove-like recesses (10) during the opening and closing process.

2. Rotary fastener according to claim 1, characterised in that the groove-like recesses (10) are formed in a Y-shaped manner viewed from the side.

3. Rotary fastener according to claim 1 or 2, characterised in that the groove-like recesses (10) are located on the pin (2) above the transverse portion (4) and the projection (8) is located in the bore hole (19) of the receiver (6).

4. Rotary fastener according to one of the claims 1 to 3, characterised in that the pin (2) is provided with two systems of diametrically opposed, groove-like recesses (10) which cooperate with two projections (8) of the receiver (6).

5. Rotary fastener according to one of the claims 1 to 4, characterised in that the receiver (6) has a base plate intended for installation at the first component (24) and a tubular piece (16) intended for receiving the spring element (12).

6. Rotary fastener according to claim 5, characterised in that there is provided at the end of the pin (4) (sic) which lies opposite the transverse portion (4) a head (14) which engages over the tubular piece (16).

7. Rotary fastener according to one of the claims 1 to 6, characterised in that the receiver (6) can be secured against torsion in relation to the first component (24).

8. Rotary fastener according to claim 7, characterised in that a peg (18) is provided on the underside of the receiver (6) as a means of securing against torsion.

9. Rotary fastener according to one of the claims 1 to 8, characterised in that the receiver (6) has a centering ring which is arranged about the bore hole (19) for the engagement into the assembly bore hole of the first component (24).

10. Rotary fastener according to one of the claims 6 to 9, characterised in that the head (14) is formed such that by means of its location in relation to the receiver (6) it indicates the position of the pin (2).

11. Rotary fastener according to one of the claims 1 to 10, characterised in that the transverse portion (4) of the pin (2) is formed such that with tilting of the pin (2) it can also be guided through bore holes in the first component (24), the diameter of which is slightly smaller than the greatest transverse dimension of the transverse portion (4).

**Revendications**

1. Dispositif de verrouillage par rotation pour assembler des pièces (20, 24) en forme de plaques, comprenant un corps (6) pouvant être rapporté sur la première pièce (24), une broche (2) munie d'une partie transversale (4), destinée à traverser les pièces (20, 24) et reçue dans un alésage (19) du corps (6), le corps (6) et la broche (2) étant équipés de moyens de guidage (8, 10) coopérant entre eux, ainsi qu'un élément de ressort (12) qui est disposé entre la broche (2) et le corps (6), la broche (2) exécutant, lors de mouvements dans les deux sens entre la position de déverrouillage et la position de verrouillage, un mouvement longitudinal axial à l'encontre de la force de l'élément de ressort (12), puis un mouvement de rotation et ensuite un mouvement longitudinal dans le sens de la force de l'élément de ressort (12), et la partie transversale (4) étant réalisée de manière que dans la position de verrouillage de la broche (2), elle vienne se placer transversalement à un trou (22), élargi de façon diamétrale, de la deuxième pièce (20) et que la broche (2) puisse tourner autour de son axe longitudinal uniquement à l'état comprimé dudit moyen de ressort, caractérisé par le fait que les moyens de guidage (8, 10) comprennent au moins une saillie (8) prévue dans la zone de l'alésage (19) et d'évidements (10) en forme de rainures, s'étendant axialement, et que la broche (2) est guidée, pendant l'operation de déverrouillage et de verrouillage, par engagement de la saillie (8) dans les creux (10) en forme de rainure.

2. Dispositif de verrouillage par rotation suivant la revendication 1, caractérisé par le fait que les creux (10) en forme de rainures sont réalisés avec une forme en Y en vue latérale.

3. Dispositif de verrouillage par rotation suivant la revendication 1 ou 2, caractérisé par le fait que les creux (10) en forme de rainures se trouvent sur la broche (2) au-dessus de la partie transversal (4) et la saillie (8) se trouve dans l'alésage (19) du corps (6).

4. Dispositif de verrouillage par rotation suivant l'une des revendications 1 à 3, caractérisé par le fait que la broche (2) est munie de deux systèmes de creux (10) en forme de rainure, diamètralement opposés, ces creux coopérant avec deux saillies (8) du corps (6).

5. Dispositif de verrouillage par rotation suivant l'une des revendications 1 à 4, caractérisé par le fait que le corps (6) présente une plaque de base destinée à l'application contre la première pièce (24) et un tronçon tubulaire (16) destiné à recevoir l'élément de ressort (12).

6. Dispositif de verrouillage par rotation suivant la revendication 5, caractérisé par le fait qu'une tête (14) qui dépasse le tronçon tubulaire (16) est disposée à l'extrémité de la broche (2), opposée à la partie transversale (4).

7. Dispositif de verrouillage par rotation suivant l'une des revendications 1 à 6, caractérisé par le fait que le corps (6) peut être immobilisé en rotation par rapport à la première pièce (24).

8. Dispositif de verrouillage par rotation suivant la revendication 7, caractérisé par le fait qu'un doigt (18) est disposé sur la face inférieure du corps (6) pour immobiliser ce dernier en rotation.

9. Dispositif de verrouillage par rotation suivant l'une des revendications 1 à 8, caractérisé par le fait que le corps (6) présente un anneau de centrage disposé autour de l'alésage (19) pour pénétrer dans le trou de montage de la première pièce (24).

10. Dispositif de verrouillage par rotation suivant l'une des revendications 6 à 9, caractérisé par le fait que la tête (14) est réalisée de manière qu'il indique la position de la broche (2) par sa position par rapport au corps (6).

11. Dispositif de verrouillage par rotation suivant l'une des revendications 1 à 10, caractérisé par le fait que la partie transversale (4) de la broche (2) est conformée de manière à pouvoir passer, par basculement de la broche (2), également à travers des trous dans la première pièce (24) dont le diamètre est légèrement inférieur à la plus grande dimension transversale de la partie transversale (4).

FIG. 1

FIG. 3

EP 0 239 767 B1

FIG. 2

FIG. 5

FIG. 4

FIG. 6